# EUROPÄISCHE PATENTSCHRIFT

(11) **EP 1 481 759 B1**
(45) Veröffentlichungstag und Bekanntmachung des Hinweises auf die Patenterteilung: **29.11.2006**
(21) Anmeldenummer: 04008176.2
(22) Anmeldetag: 03.04.2004
(51) Int. Cl.: B23Q 7/04

(54) **Handhabungsanordnung und -zelle**
Handling device and unit
Dispositif de manipulation et unité

(30) Priorität: 28.05.2003 DE 10325394; 10.10.2003 DE 10348223
(43) Veröffentlichungstag der Anmeldung: 01.12.2004
(73) Patentinhaber: FELSOMAT GmbH & Co. KG, D-75203 Königsbach-Stein (DE)
(72) Erfinder: Jaeger, Helmut F., 75203 Königsbach-Stein (DE)
(74) Vertreter: Kohler Schmid Möbus

(56) Entgegenhaltungen:
- EP-A- 0 721 821
- DE-A1- 19 628 556
- PATENT ABSTRACTS OF JAPAN Bd. 008, Nr. 069 (M-286), 31. März 1984 (1984-03-31) & JP 58 216833 A (MOCHIZUKI KIKAI SEISAKUSHO:KK), 16. Dezember 1983 (1983-12-16)

## Beschreibung

Die vorliegende Erfindung betrifft eine Handhabungsanordnung mit einem Horizontalportal, an dem ein Schlitten horizontal verfahrbar ist, wobei an dem Schlitten ein Arm um eine Achse verschwenkbar gelagert ist, die parallel zu dem Portal verläuft, und wobei an dem Ende des Arms ein Greifer für Werkstücke angeordnet ist.

Ferner betrifft die vorliegende Erfindung eine Handhabungszelle mit einem Gestell und einer Handhabungsanordnung der genannten Art.

Derartige Handhabungsanordnungen sind bekannt, siehe z.B. EP-A-0721821. Bei diesen ist an dem Schlitten ein Arm verschwenkbar gelagert, um so Werkstücke und/oder Werkzeuge in eine Werkzeugmaschine hineinschwenken zu können.

Auch ist es bekannt, an einem Schlitten eines Portals einen Knickarm-Roboter, der fünf Achsen aufweist, hängend anzuordnen.

Ferner ist es bekannt, an einem Schlitten eines Horizontalportals einen Arm vertikal beweglich zu lagern, siehe z.B. die DE-A-19628556. An dem unteren Ende des vertikal beweglichen Arms ist ein Greifer vorgesehen, um von oben in eine Werkzeugmaschine eingreifen zu können. Dabei kann an dem unteren Ende des vertikal beweglichen Armes auch eine seitliche Verlängerung für den Greifer vorgesehen sein.

Aufgabe der Erfindung ist es, eine Handhabungsanordnung anzugeben, die bei geringer Bauhöhe und geringem konstruktivem Aufwand es ermöglicht, Werkstücke und/oder Werkzeuge in einer Richtung quer zur Erstreckung des Horizontalportals weit bewegen zu können. Beispielsweise soll die Handhabungsanordnung dazu geeignet sein, bei geringer Bauhöhe und geringem konstruktivem Aufwand tief in eine seitliche Öffnung einer Werkzeugmaschine hineingreifen zu können.

Diese Aufgabe wird bei der eingangs genannten Handhabungsanordnung dadurch gelöst, dass der Schlitten einen länglichen Träger aufweist, an dem ein weiterer Schlitten vertikal verfahrbar gelagert ist, und dass der Arm an dem weiteren Schlitten verschwenkbar gelagert ist.

Die obige Aufgabe wird ferner durch eine Handhabungszelle mit einer derartigen Handhabungsanordnung gelöst.

Durch die Bereitstellung eines länglichen Trägers mit einem weiteren Schlitten ist es möglich, die Reichweite des Armes beträchtlich zu verlängern. Die "vertikale" Verfahrbarkeit des weiteren Schlittens ist so zu verstehen, dass wenigstens eine Bewegungskomponente der Verfahrbarkeit vertikal ist. Im Gegensatz zu rein vertikal verfahrbaren Armen an horizontal verfahrbaren Schlitten ist zudem nur eine geringe Bauhöhe erforderlich. Mit anderen Worten ist es nicht notwendig, dass sich der Arm über das Horizontalportal hinaus nach oben erstreckt.

Ferner kann der Arm mit dem Träger fluchtend ausgerichtet werden, so dass die Anordnung aus Träger und Arm auch durch schmale Öffnungen hindurch in Horizontalrichtung verfahren werden kann.

Vorzugsweise erstreckt sich der längliche Träger in vertikaler Richtung.

Hierdurch ist ein großer Arbeitsbereich bzw. eine große Reichweite in vertikaler Richtung erzielbar. Ferner kann die Handhabungsanordnung in horizontaler Richtung schmal ausgebildet werden.

Gemäß einer bevorzugten Ausführungsform erstreckt sich der Vertikalträger von dem Portal aus nach unten.

Hierdurch wird insbesondere eine geringe Bauhöhe realisiert. Die Handhabungsanordnung ermöglicht einen vergleichsweise großen vertikalen Arbeitsbereich, ohne dass sich der Arm über das Horizontalportal nach oben hinaus erstrecken muss.

Bei einer alternativen bevorzugten Ausführungsform ist der längliche Träger gegenüber der Vertikalen geneigt.

Hierbei lässt sich - bei gegebener Armlänge - ein größerer Arbeitsbereich in horizontaler Richtung erzielen. Insgesamt kann ein guter Kompromiss zwischen Länge des horizontalen Arbeitsbereiches und des vertikalen Arbeitsbereiches erreicht werden.

Von besonderem Vorzug ist es dabei, wenn der geneigte Träger in einer Ebene geneigt ist, die im Wesentlichen senkrecht zu der Schwenkachse ist.

Bei dieser Ausführungsform kann sich der Arbeitsbereich in horizontaler Richtung besonders weit in einer Richtung quer zur Schwenkachse (bzw. Verfahrachse des Horizontalportals) erstrecken. Demzufolge kann eine Übergabe auch in tiefe seitliche Öffnungen einer Werkzeugmaschine hinein erfolgen.

Gemäß einer weiteren bevorzugten Ausführungsform weist ein unteres Ende des geneigten Trägers hin zu einer Werkzeugmaschine, an die Werkstücke und/oder Werkzeuge mittels des Greifers übergeben werden.

Durch diese Maßnahme wird die Verlängerung des Arbeitsbereiches in horizontaler Richtung hin zu der Werkzeugmaschine noch unterstützt.

Ferner ist es vorteilhaft, wenn der Träger etwa um 45° gegenüber der Vertikalen geneigt ist.

Bei dieser Ausführungsform wird ein besonders guter Kompromiss zwischen großem Arbeitsbereich in horizontaler und großem Arbeitsbereich in vertikaler Richtung erzielt.

Auch ist es vorteilhaft, wenn ein mittlerer Bereich des geneigten Trägers an dem Schlitten festgelegt ist.

Hierdurch kann die Anordnung aus Schlitten und geneigtem Träger, trotz dessen Neigung, in Verfahrrichtung des Horizontalportals durch vergleichsweise schmale Öffnungen hindurchfahren.

Generell ist es natürlich auch denkbar, dass der Träger horizontal an dem Schlitten angebracht ist. Bei dieser Ausführungsform würde ein besonders großer horizontaler Arbeitsbereich erzielt werden, auf Kosten der Größe des Arbeitsbereiches in vertikaler Richtung.

Bei einer bevorzugten Ausführungsform der Erfindung entspricht die Länge des Trägers im Wesentlichen der Länge des Armes.

Bei dieser Ausführungsform kann die Anordnung aus Träger und Arm, wenn diese fluchtend zueinander ausgerichtet sind, auch durch Öffnungen verfahren werden, deren Höhe der Länge des Trägers entspricht. Dabei kann die Reichweite des Armes bis zur doppelten Länge des Trägers betragen.

Gemäß einem weiteren bevorzugten Ausführungsbeispiel ist der Greifer an dem Ende des Arms um eine Greiferachse drehbar gelagert, die parallel zu der Schwenkachse des Armes ausgerichtet ist.

Bei dieser Ausführungsform ist die Lage des Greifers unabhängig von der Schwenklage des Armes. Werkstücke und/oder Werkzeuge können demzufolge in der Schwenkebene des Armes in beliebigen Richtungen und Kurven verfahren werden. Dies kann durch eine Überlagerung der Bewegung des weiteren Schlittens an dem Träger, Verschwenken des Armes und Verdrehen des Greifers um die Greiferachse erfolgen.

Ferner ist es bei der erfindungsgemäßen Handhabungszelle vorteilhaft, wenn das Horizontalportal im Bereich einer Stirnseite des Gestells der Handhabungszelle angeordnet ist.

Bei dieser Anordnung lässt sich die Handhabungszelle mit ihrer Stirnseite nahe an einer Werkzeugmaschine positionieren, so dass die Reichweite des Armes weitgehend vollständig ausgenutzt werden kann.

Dabei ist es von besonderem Vorteil, wenn an der Stirnseite des Gestells ein Vorsprung vorgesehen ist, auf dem eine Führungsschiene des Horizontalportals festgelegt ist.

Durch diese Maßnahme ist es möglich, die Handhabungszelle noch näher mit ihrer Stirnseite an eine Werkzeugmaschine heranzustellen, wobei der Vorsprung in vielen Fällen über die Werkzeugmaschine überstehen kann. Ferner ist es möglich, die Oberseite der Handhabungszelle von der Führungsschiene freizuhalten, so dass sich eine bessere Zugänglichkeit ergibt, insbesondere bei Wartungsarbeiten.

Gemäß einer weiteren insgesamt bevorzugten Ausführungsform ist der Träger innerhalb des Gestells in unmittelbarer Nachbarschaft zu einer Stirnseite verfahrbar, an der das Horizontalportal vorgesehen ist.

Durch diese Maßnahme ist zum einen gewährleistet, dass der Träger nahe der Stirnseite verfährt, so dass der Arm weit in eine benachbart hierzu angeordnete Werkzeugmaschine hineinreichen kann. Ferner ist der verbleibende Teil des Raumes innerhalb der Handhabungszelle nicht durch den Verfahrweg des Trägers eingenommen. Insofern ergibt sich eine bessere Wartbarkeit. Außerdem ermöglicht dies, dass die Handhabungszelle mit unterschiedlichen Arten von Übergabestationen ausgerüstet werden kann. Dies fördert die Modularität der Handhabungszelle.

Gemäß einer weiteren bevorzugten Ausführungsform erstreckt sich das Horizontalportal in seiner Längsrichtung über das Gestell der Handhabungszelle hinaus.

Bei dieser Ausführungsform kann die Handhabungszelle flexibler in Bezug auf die Werkzeugmaschine angeordnet werden, insbesondere seitlich gegenüber der Werkzeugmaschine versetzt.

Gemäß einer weiteren bevorzugten Ausführungsform ist in dem Gestell eine Übergabestation angeordnet, von der Werkstücke und/oder Werkzeuge mittels des Greifers entnommen bzw. auf der Werkstücke und/oder Werkzeuge mittels des Greifers abgelegt werden können.

Die Übergabestation kann im einfachsten Fall eine Palette mit Werkstücken und/oder Werkzeugen sein. Die Übergabestation kann jedoch auch durch eine oder mehrere Palettenstationen gebildet sein, durch Förderbänder, Schubläden oder ähnliches.

So ist es von besonderem Vorteil, wenn die Übergabestation wenigstens eine Schublade aufweist, die von dem Greifer bzw. einem an dem Greifer (oder dem Ende des Armes) angeordneten Mitnehmer aus- und/oder einziehbar ist.

Hierdurch wird die Funktionalität des Armes dahingehend erweitert, dass dieser auch dazu verwendet wird, eine Schublade in eine geeignete Übergabeposition zu bewegen. Hierdurch wird das Be- und Entladen der Schubladen erleichtert, dann nämlich, wenn diese in einer Be- oder Entladeposition angeordnet sind.

Dabei ist es ferner von besonderem Vorteil, wenn die Schublade in einer Richtung senkrecht zur Erstreckung des Horizontalportals mittels des Greifers bzw. des daran vorgesehenen Mitnehmers aus- und/oder einziehbar ist.

Hierdurch ist die Schubrichtung der Schublade etwa mit der Schwenkebene des Armes ausgerichtet, so dass sich der Arm konstruktiv besonders günstig zum Ein- und/oder Ausziehen der Schublade einsetzen lässt.

Ferner ist es vorteilhaft, wenn die Übergabestation mindestens zwei nebeneinander in einer Richtung parallel zur Erstreckung des Horizontalportals angeordnete Palettenstationen aufweist.

Bei dieser Anordnung kann beispielsweise eine Palettenstation dem Zuführen und die andere Palettenstation dem Abführen von Teilen zugeordnet sein.

Dabei ist es von besonderem Vorteil, wenn eine parallel zur Erstreckung des Horizontalportals beweglich gelagerte Palettenablage mittels des Greifers bzw. eines daran (oder an dem Arm) vorgesehenen Mitnehmers verfahrbar ist.

Dies ermöglicht, dass eine Palette von einer Palettenstation auf die Palettenablage verlegt wird und sowohl der einen wie der anderen Palettenstation zugeordnet werden kann. Hierdurch ist es leichter möglich, ganze Palettenstapel in den Palettenstationen auszutauschen, ohne den Arbeitsfluss der Handhabungszelle beim Zu- und Abführen von Werkzeugen bzw. Werkstücken zu der Werkzeugmaschine zu stören.

Generell hat die erfindungsgemäße Handhabungszelle eine Bauhöhe, die sich vorzugsweise in keinem Betriebszustand über die Höhe des Portals hinaus erstreckt. Ferner wird dennoch erreicht, dass der über den weiteren Schlitten vertikal oder geneigt verfahrbare, verschwenkbare Arm tief in eine Werkzeugmaschine hineinreichen kann.

Dafür werden nur drei Achsen benötigt, nämlich die Linearachse zum Verfahren des weiteren Schlittens, die Drehachse zum Verschwenken des Armes an dem weiteren Schlitten und die Drehachse zum Verschwenken des Greifers. Hinzu kommt die horizontale Portalachse, an der der Schlitten horizontal verfahrbar ist.

Besonders bevorzugt ist es ferner, wenn zum Verschwenken des Armes und zum Verschwenken des Greifers vorgesehene Elektromotoren an dem weiteren Schlitten vorgesehen sind. Hierdurch kann die Masse des Armes verringert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Seitenansicht einer Anordnung aus einer erfindungsgemäßen Handhabungszelle und einer Werkzeugmaschine;
- Fig. 2: eine Draufsicht auf die in Fig. 1 gezeigte Anordnung;
- Fig. 3: eine schematische Seitenansicht einer Anordnung aus einer Handhabungszelle gemäß einer weiteren Ausführungsform der Erfindung und einer Werkzeugmaschine;
- Fig. 4: eine Draufsicht auf die Anordnung der Fig. 3;
- Fig. 5: eine schematische Seitenansicht einer weiteren Ausführungsform der erfindungsgemäßen Handhabungszelle;
- Fig. 6: eine Draufsicht auf die Handhabungszelle der Fig. 5;
- Fig. 7: eine schematische Darstellung des Arbeitsbereiches einer erfindungsgemäßen Handhabungsanordnung;
- Fig. 8: eine Draufsicht auf eine weitere Ausführungsform einer erfindungsgemäßen Handhabungsanordnung; und
- Fig. 9: eine schematische Seitenansicht einer weiteren Ausführungsform der erfindungsgemäßen Handhabungsanordnung mit einem geneigten Träger.

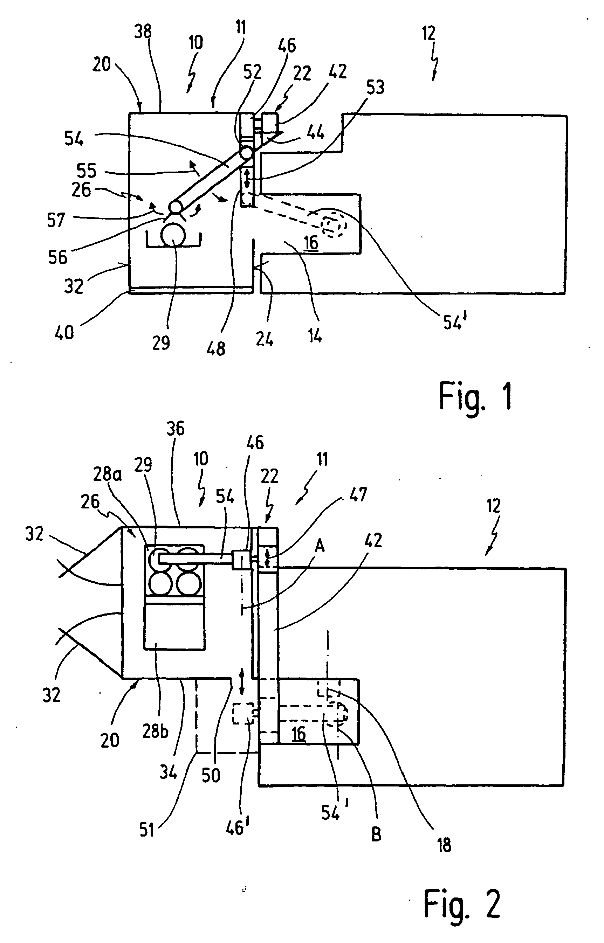

In den Figuren 1 und 2 ist eine erfindungsgemäße Handhabungszelle generell mit 10 bezeichnet.

Die Handhabungszelle 10 weist eine Handhabungsanordnung 11 auf und ist in direkter Zuordnung zu einer Werkzeugmaschine 12 angeordnet, die eine seitliche Öffnung 14 hin zu einem Bearbeitungsraum 16 innerhalb der Werkzeugmaschine 12 aufweist.

Die Handhabungszelle 10 weist ein Gestell 20 üblicher Bauart auf, in der Regel ein Rahmen aus geschweißten oder zusammengesetzten Metallprofilen. Ferner ist das Gestell 20 in der Regel bis auf die notwendigen Öffnungen und Türen voll verkleidet, um die üblichen arbeitsschutzrechtlichen Bestimmungen zu erfüllen.

An der Oberseite des Gestells 20 ist ein Horizontalportal 22 der Handhabungsanordnung 11 vorgesehen, das sich etwa parallel zu einer Stirnseite 24 des Gestells 20 erstreckt. Die Stirnseite 24 ist der Werkzeugmaschine 12 zugewandt.

Die Handhabungszelle 10 dient zum automatisierten Zuführen von Werkstücken und/oder Werkzeugen zu der Werkzeugmaschine 12.

Im Folgenden soll jede Bezugnahme auf das Zu- bzw. Abführen von Werkstücken sich in gleichem Maße auf das Zu- und Abführen von Werkzeugen beziehen, um die Sprachweise zu vereinfachen.

Zur Pufferung des Zu- und Abführens von Werkstücken ist in der Handhabungszelle 10 eine Übergabestation 26 vorgesehen.

In der dargestellten Ausführungsform gemäß den Figuren 1 und 2 weist die Übergabestation 26 zwei nebeneinander angeordnete Palettenstationen 28a, 28b auf. Eine Palettenstation (z.B. 28a) enthält einen Stapel von Paletten, auf denen jeweils der Werkzeugmaschine 12 zuzuführende Werkstücke 29 angeordnet sind. Die andere Palettenstation (z.B. 28b) weist ebenfalls einen Stapel von übereinander liegenden Paletten auf, auf denen von der Werkzeugmaschine 12 bearbeitete Werkstücke abgelegt werden können.

Die Palettenstapel der Palettenstationen 28a, 28b sind über eine Tür 32 (die im vorliegenden Ausführungsbeispiel zweiflüglig ausgebildet ist) aus der Handhabungszelle entnehmbar bzw. in diese einführbar. Die Tür 32 ist an der der Stirnseite 24 gegenüberliegenden Seite vorgesehen, kann jedoch auch an einer von zwei Seitenwänden 34, 36 angeordnet sein.

Die Oberseite der Handhabungszelle 10 ist durch eine (in der Regel abnehmbare) Decke 38 verschlossen. Die Handhabungszelle 10 ruht auf einem starr verankerten Sockel 40.

Das Horizontalportal 22 weist eine Führungsschiene 42 auf, die parallel zu der Stirnseite 24 verläuft. Die Führungsschiene 42 ist auf einem Vorsprung 44 angeordnet, der sich von der Stirnseite 24 hin zu der Werkzeugmaschine 12 erstreckt. Wie in Fig. 1 dargestellt, kann der Vorsprung 44 die Werkzeugmaschine 12 zumindest teilweise überragen, um die Stirnseite 24 möglichst nahe an die gegenüberliegende Seite der Werkzeugmaschine 12 anordnen zu können.

An der Führungsschiene 42 ist ein Schlitten 46 der Handhabungsanordnung 11 parallel zur Stirnseite 24 in horizontaler Richtung verfahrbar. Die Bewegungsrichtung des Schlittens 46 ist bei 47 gezeigt.

Von dem Schlitten 46 erstreckt sich starr ein Vertikalträger 48 nach unten.

Im vorliegenden Fall ist die Handhabungszelle 10, wie es in Fig. 2 zu sehen ist, gegenüber dem Bearbeitungsraum 16 parallel zur Bewegungsrichtung 47 versetzt angeordnet.

Die Führungsschiene 42 erstreckt sich demzufolge über das Gestell 20 hinaus, genauer gesagt über die Seitenwand 34 hinaus, so dass der Schlitten 46 gegenüberliegend dem Bearbeitungsraum 16 positioniert werden kann.

Zum Zwecke des Einführens des Vertikalträgers 48 in den Innenraum der Handhabungszelle 10 ist in der Seitenwand 34 eine Öffnung 50 vorgesehen. Der Vertikalträger 48 wird von dem Schlitten 46 so geführt, dass er im Inneren der Handhabungszelle 10 in unmittelbarer Nachbarschaft zu der Stirnseite 24 verfährt. Bei 51 ist schematisch eine Schutzwand dargestellt, die den Raum vor der Werkzeugmaschine einschließlich der Öffnung 50 verschließt.

An dem Vertikalträger 48 ist ein weiterer Schlitten 52 in vertikaler Richtung verfahrbar gelagert. Die Bewegungsrichtung des weiteren Schlittens 52 ist bei 53 gezeigt.

An dem weiteren Schlitten 52 ist ein Arm 54 verschwenkbar gelagert, in einer Schwenkebene, die senkrecht zu der Bewegungsrichtung 47 des Schlittens 46 ausgerichtet ist. Die Drehachse des Armes 54 an dem weiteren Schlitten 52 ist in Fig. 2 schematisch bei A angedeutet. Die Bewegungsrichtung des Armes 54 ist in Fig. 1 bei 55 gezeigt.

An dem freien Ende des Armes 54 ist ein Greifer 56 angeordnet. Der Greifer 56 ist gleichermaßen verschwenkbar bzw. drehbar ausgebildet, und zwar um eine Drehachse B, die parallel zu der Drehachse A ausgerichtet ist.

Zur Aufnahme eines an der Palettenstation 28A bereitstehenden Werkstückes 29 wird der Schlitten 46 so verfahren, dass der Arm 54 dem Ziel-Werkstück 29 gegenüberliegend angeordnet ist. Anschließend wird das Werkstück 29 durch eine überlagerte Bewegung von weiterem Schlitten 52, Arm 54 und Greifer 56 ergriffen und von der Palettenstation 28a abgehoben. Anschließend wird der Arm 54 mit dem Vertikalträger 48 ausgerichtet und der Schlitten 46 verfährt in Richtung hin zum Bearbeitungsraum 16. Dabei kann auch der weitere Schlitten 52 geeignet verfahren werden. Es versteht sich, dass sich diese Bewegungen wiederum überlagern können.

Nach Durchtritt durch die Öffnung 50 wird der weitere Schlitten nach unten verfahren und der Arm 54 in den Bearbeitungsraum 16 hineingeschwenkt. Diese Position ist in den Figuren 1 und 2 gestrichelt dargestellt. In dem Bearbeitungsraum kann das Werkstück 29 an die Bearbeitungsspindel 18 übergeben werden.

In umgekehrter Reihenfolge wird ein in der Werkzeugmaschine 12 bearbeitetes Werkstück in der in Figur 1 und 2 gestrichelt dargestellten Position von dem Greifer 56 übernommen und in die Handhabungszelle hinein verbracht, wo es auf dem anderen Palettenstapel 28b abgelegt wird.

Durch die Tatsache, dass der Arm 54 und der Greifer 56 in parallelen Ebenen verschwenkbar gelagert sind, ist es möglich, den Greifer 56 so zu positionieren, dass dieser Werkstücke 29 lagerichtig aufnehmen und absetzen sowie lagerichtig an der Spindel 18 übergeben kann.

Durch eine überlagerte Bewegung von dem weiteren Schlitten 52, des Armes 54 und des Greifers 56 können die Werkstücke 29 in einer Ebene senkrecht zu der Verfahrachse 47 entlang einer beliebigen Kurve oder Bahn verfahren werden.

Der Antrieb zum Verschwenken des Armes 54 und der Antrieb zum Schwenken des Greifers 56 können voneinander getrennte, entkoppelte Antriebe sein. Zur Vereinfachung des konstruktiven Aufwandes können diese jedoch auch gekoppelt sein.

Es versteht sich, dass die Antriebe für den Schlitten 46, den weiteren Schlitten 52, den Arm 54 und den Greifer 56 mittels einer geeigneten Steuerung koordiniert zueinander bewegt werden. Die Steuerung kann insbesondere eine numerische Steuerung wie eine SPS-Steuerung sein.

Anstelle einer versetzten Anordnung der Handhabungszelle 10 gegenüber dem Bearbeitungsraum 16 ist es auch möglich, an der Stirnseite 24 eine entsprechende Ausnehmung vorzusehen und die Handhabungszelle 10 unmittelbar vor der Werkzeugmaschine 12 zu positionieren.

Die Übergabestation 26 kann auf verschiedenste Art und Weise ausgebildet sein. Anstelle von Palettenstationen 28a, 28b können auch andere Maßnahmen zum Bereitstellen bzw. Abfördern von Werkstücken vorgesehen sein. Im einfachsten Fall kann die Übergabestation 26 eine einfache Palette sein. Als Übergabestation kann jedoch auch ein Förderband vorgesehen sein, das durch die Handhabungszelle 10 hindurchläuft oder an einer Seitenwand (beispielsweise Seitenwand 36) oder der der Stirnseite 24 gegenüberliegenden Wand an der Handhabungszelle 10 vorbeigeführt werden.

Man erkennt, dass die Handhabungszelle 10 nur eine geringe Bauhöhe besitzt, die etwa gleich jener der Werkzeugmaschine 12 sein kann.

Nichtsdestotrotz ist es durch die Überlagerung der Bewegung des weiteren Schlittens 52 und der Schwenkbewegung 55 des Armes 54 möglich, tief in einen Bearbeitungsraum 16 der Werkzeugmaschine 12 hineinzureichen. Die Reichweite in die Werkzeugmaschine hinein wird im Wesentlichen durch die Länge des Armes 54 sowie den Abstand des Vertikalträgers 48 von der Werkzeugmaschine 12 bestimmt.

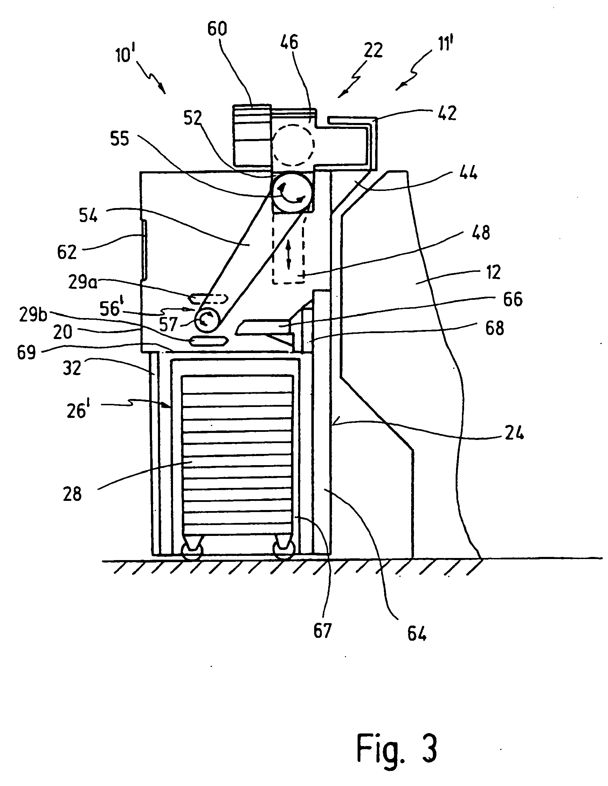

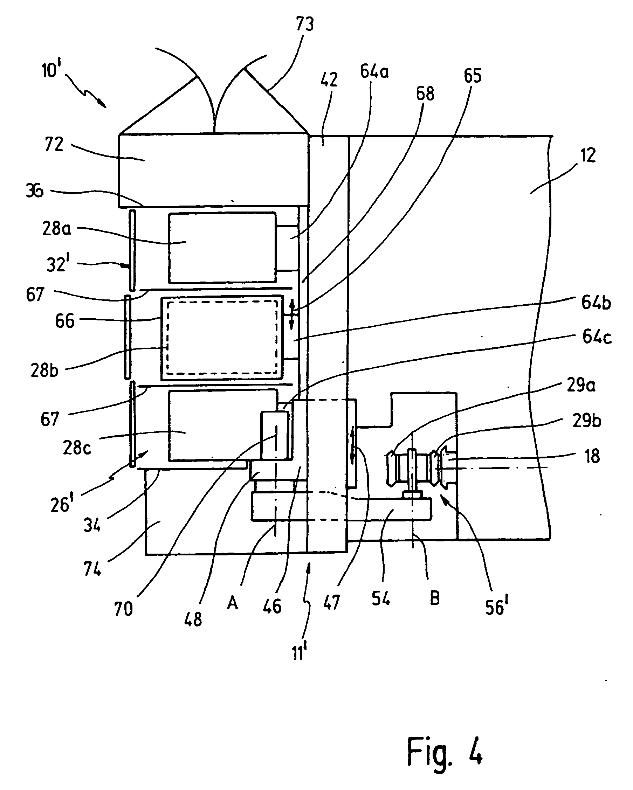

In den Figuren 3 und 4 ist eine weitere Ausführungsform einer erfindungsgemäßen Handhabungszelle generell mit 10' bezeichnet.

Die generelle Funktionsweise der Handhabungszelle 10' entspricht jener der Handhabungszelle 10 der Figuren 1 und 2. Im Folgenden wird daher lediglich auf die Unterschiede hierzu eingegangen.

So ist in Fig. 3 zunächst ein Schleppkabel 60 gezeigt, das zur elektrischen Versorgung der Motoren für den weiteren Schlitten 52, den Arm 54 und den Greifer 56 dient. Das Schleppkabel 60 ist dabei auf der der Führungsschiene 42 gegenüberliegenden Seite des Schlittens 46 angeordnet.

Ferner ist in Fig. 3 ein Fenster 62 in der der Stirnseite 24 gegenüberliegenden Wand der Handhabungszelle 10 dargestellt. Durch das Fenster kann eine Bedienperson die ordnungsgemäße Funktion der Handhabungszelle sowie den aktuellen Ladezustand der Übergabestation überwachen, die in Fig. 3 und 4 mit 26' bezeichnet ist.

Die Übergabestation 26' weist, wie es insbesondere Fig. 4 zu entnehmen ist, drei nebeneinander angeordnete Palettenstationen 28a, 28b, 28c auf. Jede der Palettenstationen 28a, 28b, 28c ist eine Vertikalachse 64 zugeordnet, mittels der Paletten der jeweiligen Palettenstationen vertikal bewegt werden können. Die entsprechenden Vertikalachsen sind in Fig. 4 mit 64a, 64b bzw. 64c bezeichnet.

Ferner weist die Übergabestation 26' eine Palettenablage 66 auf, die entlang einer Horizontalachse 68 parallel zur Bewegungsrichtung 47 bewegt werden kann, wie es schematisch bei 65 gezeigt ist. In Fig. 3 ist die Palettenablage 66 aus Gründen einer übersichtlicheren Darstellung benachbart zu der Stirnseite 24 angeordnet. In der Regel ist diese jedoch benachbart zu der gegenüberliegenden Vorderseite angeordnet bzw. ist dort gelagert.

Durch die horizontale Bewegbarkeit kann die Palettenablage 66 jeder der drei Palettenstationen 28a, 28b, 28c zugeordnet werden (in Fig. 4 ist sie der mittleren Palettenstation 28b zugeordnet).

Durch die horizontal verschiebliche Palettenablage 66 kann der Arbeitsfluss der Handhabungszelle 10' von dem Be- und Entladen der Palettenstationen 28a, 28b, 28c entkoppelt werden. In der in Fig. 4 gezeigten Stellung ist es beispielsweise möglich, dass die Handhabungszelle 10' von der der Palettenstation 28b zugeordneten Palettenablage 66 Werkstücke entnimmt oder auf dieser ablegt, wobei der darunter liegende Palettenstapel der Palettenstation 28b ausgetauscht werden kann.

Ferner ist bei der Handhabungszelle 10' zwischen den Palettenstationen 28 jeweils eine Schottwand 67 und ein sogenannter Tunnel 69 vorgesehen, der in horizontaler Richtung beweglich ist.

Der Tunnel 69 weist die Breite einer Palettenstation 28 auf. Indem der Tunnel 69 über eine Palettenstation gefahren wird, wird diese Palettenstation gegenüber dem verbleibenden Arbeitsraum der Handhabungszelle 10' und den anderen Palettenstationen 28 abgeschottet. Demzufolge kann eine Bedienperson bspw. einen Palettenstapel in eine derartige abgeschottete Palettenstation fahren oder aus dieser entfernen, während gleichzeitig die Handhabungsanordnung 11' innerhalb des Gestells 20 der Handhabungszelle 10' Werkstücke von den anderen Palettenstationen entnimmt oder darauf ablegt.

Der Tunnel 69 ist in Fig. 4 aus Gründen einer übersichtlichen Darstellung nicht gezeigt. In der Regel ist er jedoch unabhängig von der Palettenablage 66 in Horizontalrichtung beweglich ausgebildet.

In der Darstellung der Fig. 4 ist zu erkennen, dass die Tür 32' als dreiflüglige Schiebetür ausgebildet ist.

In Fig. 4 ist ferner zu erkennen, dass an dem Schlitten 46 ein Motor 70 festgelegt ist. Der Motor 70 kann zum Antreiben des weiteren Schlittens 52, des Armes 54 um die Drehachse A und/oder zum Antreiben des Greifers 56' verwendet werden. Durch die Lagerung an dem Schlitten 46 können die beweglichen Teile wie der weitere Schlitten 52 und der Arm 54 mit einer geringeren Masse ausgebildet werden, so dass sich insgesamt eine höhere Dynamik erzielen lässt.

In den Figuren 3 und 4 ist ferner gezeigt, dass der Greifer 56' als Doppelgreifer ausgebildet ist.

Bei dieser Ausführungsform ist es folglich möglich, einen Arbeitshub gleichzeitig zum Abnehmen eines Werkstückes 29b von der Spindel 18 der Werkzeugmaschine 12 und zum Übergeben eines weiteren Werkstückes 29a an diese Spindel 18 zu nutzen.

An der Außenseite der Seitenwand 36 ist ein Schaltschrank 72 vorgesehen, der eine Tür 73 zu Wartungszwecken aufweist.

An der gegenüberliegenden Seitenwand 34 ist eine weitere Station vorgesehen, im vorliegenden Fall eine Entölstation 74, in der Werkstücke 29, die von der Bearbeitung aus der Werkzeugmaschine 12 zurückkommen, zunächst entölt werden können, bevor sie an die Übergabestation 26' übergeben werden.

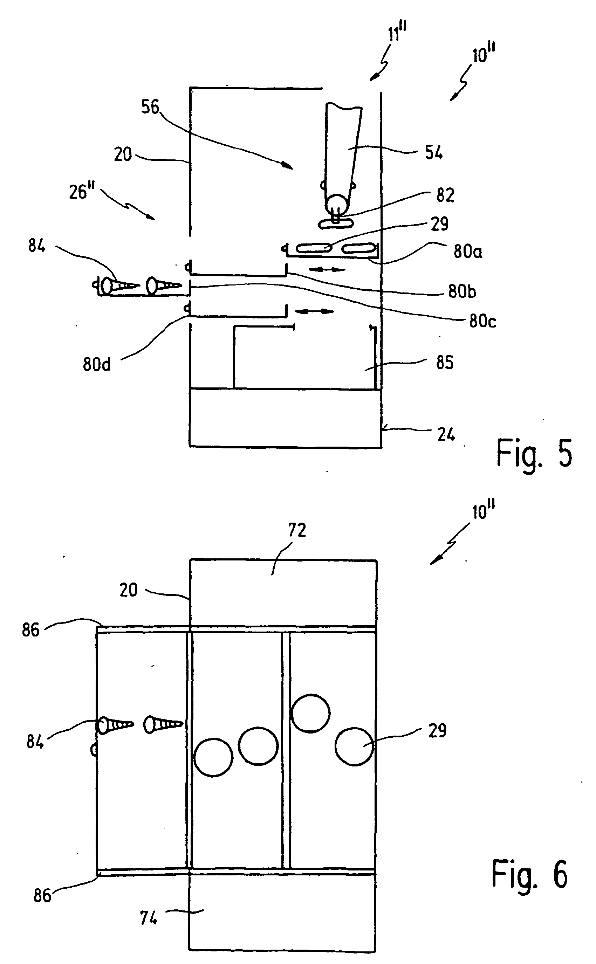

Eine weitere Ausführungsform einer erfindungsgemäßen Handhabungszelle ist in den Figuren 5 und 6 generell mit 10'' bezeichnet.

Der konstruktive Aufbau und die generelle Funktionsweise der Handhabungszelle 10" entspricht jener der Handhabungszellen 10 bzw. 10' der Figuren 1 bis 4. Im Folgenden wird lediglich auf Unterschiede eingegangen.

Die Handhabungszelle 10" weist eine weitere Ausführungsform einer Übergabestation 26" auf.

Die Übergabestation 26" weist eine Mehrzahl von übereinander angeordneten Schubladen 80a, 80b, 80c, 80d auf. Die Schubladen 80 sind in einer Richtung senkrecht zur Verfahrrichtung 47 des Schlittens 46 verfahrbar.

In Fig. 5 ist gezeigt, dass von den vier Schubladen zwei Schubladen 80b und 80c sich in einer Grundposition befinden. Die Schublade 80c ist in einer Ladeposition, in der sie gegenüber dem Gestell 20 der Handhabungszelle 10" vorsteht. In dieser Stellung lassen sich die Schubladen 80 manuell be- und entladen.

Die oberste Schublade 80a ist in der Darstellung der Fig. 5 hingegen gegenüber der Grundposition zur Stirnseite 24 hin ausgezogen. In dieser Position können die auf der Schublade 80a liegenden Werkstücke entnommen werden, und zwar mittels des Greifers 56.

An dem Greifer 56 ist ferner ein Mitnehmer 82 vorgesehen, der dazu ausgelegt ist, die Schubladen 80 zu betätigen. Demzufolge könnte bei einer Abarbeitung der Schublade 80a diese mittels des Mitnehmers 82 wieder in die Grundposition versetzt werden und dann eine weitere Schublade (beispielsweise 80b) ausgezogen werden, um dann Werkstücke von dieser Schublade zu entnehmen.

Wenn alle Schubladen 80 sich in der Grundposition (in der Fig. 5 links) befinden, kann auf eine unterhalb der Schubladen 80 angeordnete Messstation 85 zugegriffen werden. Hierdurch können beispielsweise Werkstücke, die nach ihrer Bearbeitung im Rahmen einer Qualitätskontrolle zu vermessen sind, zunächst vermessen werden, um dann anschließend auf einer der Schubladen 80 abgelegt zu werden.

Es versteht sich, dass ein Mitnehmer 82 in gleicher Weise dazu verwendet werden kann, die Palettenablage 66 und/oder den Tunnel 69 der Handhabungszelle 10' der Figuren 3 und 4 in Horizontalrichtung zu bewegen. Hierdurch ist es möglich, auf separate Antriebe für diese Achsen zu verzichten.

Alternativ ist es auch möglich, dass die Schubladen 80 durch eine eigene Aktuatorik betätigt werden, beispielsweise mittels Elektromotor oder auf pneumatischer Basis.

Fig. 6 zeigt ferner, dass sich von dem Gestell 20 seitliche Führungen 86 erstrecken können, die dazu dienen, die Schubladen 80 beim Herausziehen aus der Grundposition in die Ladeposition zu führen.

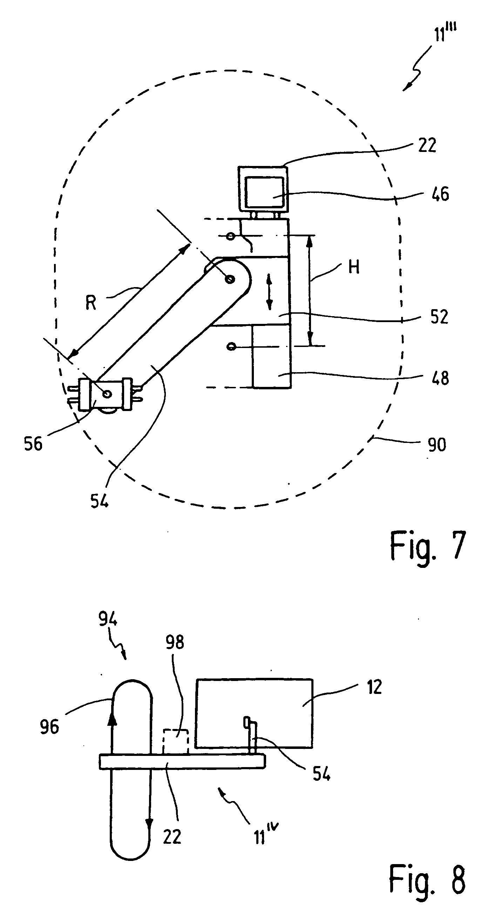

Fig. 7 zeigt in schematischer Weise eine weitere Ausführungsform einer erfindungsgemäßen Handhabungsanordnung 11'''. Bei dieser ist die Drehachse für den Arm 54 seitlich an dem Schlitten 52 vorgesehen. In Fig. 7 ist ferner in schematischer Weise die Raumabdeckung 90 dargestellt, die sich mit der erfindungsgemäßen Handhabungsanordnung 11''' (und auch den anderen Handhabungsanordnungen, die in den bisherigen Figuren gezeigt sind) realisieren lässt. Der Bereich der Raumabdeckung 90 hat in seitlicher Richtung im wesentlichen die Breite 2 R, wobei R die Länge des Armes 54 ist.

In vertikaler Richtung erstreckt sich der Bereich der Raumabdeckung 90 über maximal 2 R + H, wobei H der Hub des weiteren Schlittens 52 an dem Vertikalträger 48 ist. Dabei versteht sich, dass von dem Bereich der Raumabdeckung 90 ggf. bestimmte Abschnitte durch das Horizontalportal 42 oder Ähnliches blockiert sind. Jedenfalls ist zu erkennen, dass mit einer relativ kompakten Anordnung und vergleichsweise geringen Massen eine große Raumabdeckung 90 erzielbar ist.

Fig. 8 zeigt eine weitere Ausführungsform einer erfindungsgemäßen Handhabungsanordnung 11^{iv}. Der Handhabungsanordnung 11^{iv} ist kein Gestell einer Handhabungszelle zugeordnet. Vielmehr ist die Handhabungsanordnung 11^{iv} direkt zur Verbindung zwischen einer Werkzeugmaschine 12 und einem Fördersystem 94 zum Zu- und Abfördern von Werkstücken vorgesehen. Das Fördersystem 94 kann bspw. ein Förderband 96 oder eine Mehrzahl von Förderbändern aufweisen.

Zwischen der Werkzeugmaschine und dem Fördersystem 94 kann eine weitere Station wie eine Messstation angeordnet sein, wie es in Fig. 8 schematisch bei 98 gezeigt ist.

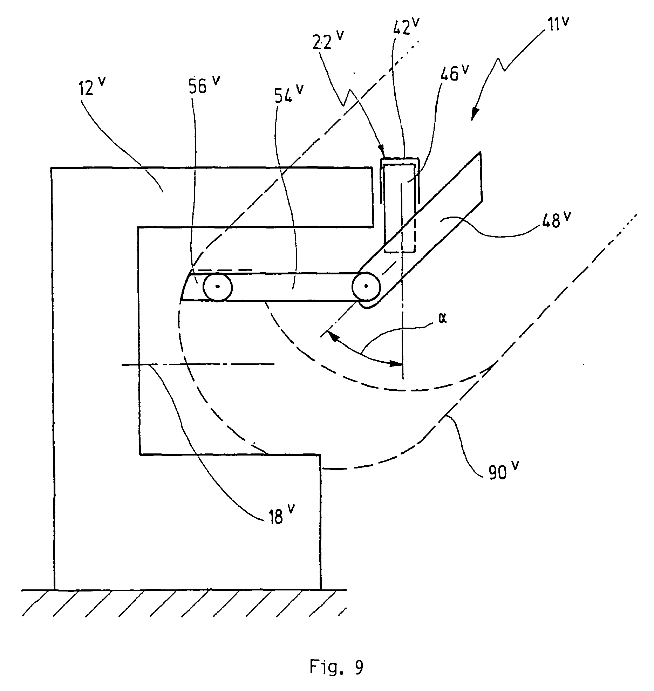

In Fig. 9 ist eine weitere Ausführungsform der erfindungsgemäßen Handhabungsanordnung generell mit 11^{v} bezeichnet.

Die Handhabungsanordnung 11^{v} ist in ihrem generellen Aufbau und ihrer generellen Funktionsweise ähnlich zu den zuvor beschriebenen Ausführungsformen von erfindungsgemäßen Handhabungsanordnungen. Einander entsprechende Elemente sind demzufolge mit den gleichen Bezugsziffern bezeichnet, wobei zur Abgrenzung der Index "V" vorgesehen ist.

Die Beschreibung des Aufbaus und der Funktionsweise der erfindungsgemäßen Handhabungsanordnungen der zuvor genannten Ausführungsformen ist auf die Handhabungsanordnung 11^{v} in gleichem Maße anwendbar. Im Folgenden wird lediglich auf die Unterschiede eingegangen.

An dem Schlitten 46^{v} des Horizontalportals 22^{v} ist ein Träger 48^{v} starr angebracht. Der Träger 48^{v} ist nicht vertikal ausgerichtet wie die Träger der vorangegangenen Ausführungsformen. Der Träger 48^{v} ist um einen Winkel α gegenüber der Vertikalen geneigt ausgerichtet. Der Wert von α kann im Bereich zwischen 0 und 90° liegen, vorzugsweise im Bereich zwischen 10 und 70°. In der dargestellten Ausführungsform beträgt der Wert α = 45°.

Dabei ist der Träger 48^{v} innerhalb einer Ebene um den Winkel α gegenüber der Vertikalen geneigt, die senkrecht zu der Verfahrachse des Schlittens 46^{v} ausgerichtet ist.

Ein mittlerer Bereich des länglichen geneigten Trägers 48^{v} ist an dem Schlitten 46^{v} festgelegt. Daher erstreckt sich ein Teil des Trägers 48^{v} nach unten hin zu einer Werkzeugmaschine 12^{v}, die der Handhabungsanordnung 11^{v} zugeordnet ist. Ein entgegengesetztes Ende des Trägers 48^{v} erstreckt sich schräg nach oben von dem Schlitten 46^{v} aus. Da der Schlitten 46^{v} selbst sich gegenüber einer Führungsschiene 42^{v} des Horizontalportals 22^{v} nach unten erstreckt, erstreckt sich der hintere Teil des geneigten Trägers 48^{v} im Wesentlichen nicht über die Führungsschiene 42^{v} hinaus. Demzufolge kann auch bei dieser Ausführungsform eine geringe Bauhöhe erzielt werden.

Der Arbeitsbereich bzw. die Raumabdeckung 90^{v} der Handhabungsanordnung 11^{v} in Bezug auf die Werkzeugmaschine 12^{v} ist in Fig. 9 mit 90^{v} dargestellt.

Insgesamt ist die Raumabdeckung 90^{v}, die mit der Handhabungsanordnung 11^{v} erzielbar ist, natürlich deutlich größer. Im Vergleich zu der Raumabdeckung 90 gemäß Fig. 7 ist die Raumabdeckung der Handhabungsanordnung 11^{v} in Horizontalrichtung etwas länger und (bei ansonsten vergleichbaren Längen von Träger und Arm) in Vertikalrichtung etwas kürzer. Kurz gesagt ist die Raumabdeckung 90^{v} gleich der Raumabdeckung 90, nur um den Winkel α des Trägers 48^{v} geneigt.

## Patentansprüche

1. Handhabungsanordnung (11) mit einem Horizontalportal (22), an dem ein Schlitten (46) horizontal verfahrbar ist, wobei an dem Schlitten (46) ein Arm (54) um eine Schwenkachse (A) verschwenkbar gelagert ist, die parallel zu dem Portal (22) verläuft, und wobei an dem Ende des Arms (54) ein Greifer (56) für Werkstücke (29) und/oder Werkzeuge (84) angeordnet ist,
**dadurch gekennzeichnet, dass**
der Schlitten (46) einen länglichen Träger (48) aufweist, an dem ein weiterer Schlitten (52) vertikal verfahrbar gelagert ist, und dass der Arm (54) an dem weiteren Schlitten (52) verschwenkbar gelagert ist.

2. Handhabungsanordnung nach Anspruch 1, **dadurch gekennzeichnet, dass** sich der längliche Träger (48) in vertikaler Richtung erstreckt.

3. Handhabungsanordnung nach Anspruch 2, **dadurch gekennzeichnet, dass** der vertikale Träger (48) sich von dem Portal (22) aus nach unten erstreckt.

4. Handhabungsanordnung nach Anspruch 1, **dadurch gekennzeichnet, dass** der längliche Träger (48^{v}) gegenüber der Vertikalen geneigt ist.

5. Handhabungsanordnung nach Anspruch 4, **dadurch gekennzeichnet, dass** der geneigte Träger (48^{v}) in einer Ebene geneigt ist, die im Wesentlichen senkrecht zu der Schwenkachse (A) ausgerichtet ist.

6. Handhabungsanordnung nach Anspruch 4 oder 5, **dadurch gekennzeichnet, dass** ein unteres Ende des geneigten Trägers (48^{v}) hin zu einer Werkzeugmaschine (12^{v}) weist, an die Werkstücke (29) und/oder Werkzeuge (84) mittels des Greifers (56^{v}) übergeben werden.

7. Handhabungsanordnung nach einem der Ansprüche 4 bis 6, **dadurch gekennzeichnet, dass** der geneigte Träger (48^{v}) etwa um 45° gegenüber der Vertikalen geneigt ist.

8. Handhabungsanordnung nach einem der Ansprüche 4 bis 7, **dadurch gekennzeichnet, dass** ein mittlerer Bereich des geneigten Trägers (48^{v}) an dem Schlitten (46^{v}) festgelegt ist.

9. Handhabungsanordnung nach einem der Ansprüche 1 bis 8, **dadurch gekennzeichnet, dass** die Länge des Trägers (48) im Wesentlichen der Länge des Armes (54) entspricht.

10. Handhabungsanordnung nach einem der Ansprüche 1 bis 9, **dadurch gekennzeichnet, dass** der Greifer (56) an dem Ende des Arms (54) um eine Greiferachse (B) drehbar gelagert ist, die parallel zu der Schwenkachse (A) des Armes (54) ausgerichtet ist.

11. Handhabungszelle (10) mit einem Gestell (20) und einer Handhabungsanordnung (11) nach einem der Ansprüche 1 bis 10.

12. Handhabungszelle nach Anspruch 11, **dadurch gekennzeichnet, dass** das Horizontalportal (22) im Bereich einer Stirnseite (24) des Gestells (20) der Handhabungszelle (10) angeordnet ist.

13. Handhabungszelle nach Anspruch 12, **dadurch gekennzeichnet, dass** an der Stirnseite (24) des Gestells (20) ein Vorsprung (44) vorgesehen ist, auf dem eine Führungsschiene (42) des Horizontalportals (22) festgelegt ist.

14. Handhabungszelle nach einem der Ansprüche 11 bis 13, **dadurch gekennzeichnet, dass** der Träger (48) innerhalb des Gestells (20) in unmittelbarer Nachbarschaft zu einer Stirnseite (24) verfahrbar ist, an der das Horizontalportal (22) vorgesehen ist.

15. Handhabungszelle nach einem der Ansprüche 11 bis 14, **dadurch gekennzeichnet, dass** sich das Horizontalportal (22) in seiner Längsrichtung über das Gestell (20) der Handhabungszelle (10) hinaus erstreckt.

16. Handhabungszelle nach einem der Ansprüche 11 bis 15, **dadurch gekennzeichnet, dass** in dem Gestell (20) eine Übergabestation (26) angeordnet ist, von der Werkstücke (29) und/oder Werkzeuge (84) mittels des Greifers (56) entnommen bzw. auf der Werkstücke (29) und/oder Werkzeuge (84) mittels des Greifers (56) abgelegt werden können.

17. Handhabungszelle nach Anspruch 16, **dadurch gekennzeichnet, dass** die Übergabestation (26'') wenigstens eine Schublade (80) aufweist, die von dem Greifer (56) bzw. einem an dem Greifer (56) angeordneten Mitnehmer (82) aus- und/oder einziehbar ist.

18. Handhabungszelle nach Anspruch 17, **dadurch gekennzeichnet, dass** die Schublade (80) in einer Richtung senkrecht zur Erstreckung des Horizontalportals (22) mittels des Greifers (56) bzw. des daran vorgesehenen Mitnehmers (82) aus- und/oder einziehbar ist.

19. Handhabungszelle nach Anspruch 16, **dadurch gekennzeichnet, dass** die Übergabestation (26; 26') wenigstens zwei nebeneinander in einer Richtung parallel zur Erstreckung des Horizontalportals angeordnete Palettenstationen (28) aufweist.

20. Handhabungszelle nach Anspruch 19, **dadurch gekennzeichnet, dass** eine parallel zur Erstreckung des Horizontalportals (22) beweglich gelagerte Palettenablage (66) mittels des Greifers (56) bzw. eines daran vorgesehenen Mitnehmers (82) verfahrbar ist.

## Claims

1. Handling arrangement (11) having a horizontal portal (22), on which a carriage (46) can be horizontally moved, with an arm (54) being supported on the carriage (46) so as to be pivotable about a pivot axis (A) which extends parallel with the portal (22), and a gripper (56) for workpieces (29) and/or tools (84) being arranged at the end of the arm (54),
**characterised in that**
the carriage (46) has an elongate carrier (48), on which an additional carriage (52) is supported so as to be vertically movable, and **in that** the arm (54) is supported pivotably on the additional carriage (52).

2. Handling arrangement according to claim 1,
**characterised in that**
the elongate carrier (48) extends in a vertical direction.

3. Handling arrangement according to claim 2,
**characterised in that**
the vertical carrier (48) extends downwards from the portal (22).

4. Handling arrangement according to claim 1,
**characterised in that**
the elongate carrier (48^{v}) is inclined relative to the vertical.

5. Handling arrangement according to claim 4,
**characterised in that**
the inclined carrier (48^{v}) is inclined in a plane which is orientated substantially perpendicularly relative to the pivot axis (A).

6. Handling arrangement according to claim 4 or 5,
**characterised in that**
a lower end of the inclined carrier (48^{v}) is directed towards a machine tool (12^{v}), to which workpieces (29) and/or tools (84) are transferred by means of the gripper (56^{v}).

7. Handling arrangement according to any one of claims 4 to 6,
**characterised in that**
the inclined carrier (48^{v}) is inclined relative to the vertical at approximately 45°.

8. Handling arrangement according to any one of claims 4 to 7,
**characterised in that**
a central region of the inclined carrier (48^{v}) is secured to the carriage (46^{v}).

9. Handling arrangement according to any one of claims 1 to 8,
**characterised in that**
the length of the carrier (48) substantially corresponds to the length of the arm (54).

10. Handling arrangement according to any one of claims 1 to 9,
**characterised in that**
the gripper (56) is supported at the end of the arm (54) so as to be rotatable about a gripper axis (B) which is orientated parallel with the pivot axis (A) of the arm (54).

11. Handling unit (10) having a frame (20) and a handling arrangement (11) according to any one of claims 1 to 10.

12. Handling unit according to claim 11,
**characterised in that**
the horizontal portal (22) is arranged in the region of an end face (24) of the frame (20) of the handling unit (10).

13. Handling unit according to claim 12,
**characterised in that**
a projection (44), on which a guide rail (42) of the horizontal portal (22) is secured, is provided at the end face (24) of the frame (20).

14. Handling unit according to any one of claims 11 to 13,
**characterised in that**
the carrier (48) can be moved within the frame (20) directly adjacent to an end face (24), on which the horizontal portal (22) is provided.

15. Handling unit according to any one of claims 11 to 14,
**characterised in that**
the horizontal portal (22) extends beyond the frame (20) of the handling unit (10) in the longitudinal direction thereof.

16. Handling unit according to any one of claims 11 to 15,
**characterised in that**
there is arranged in the frame (20) a transfer station (26), from which workpieces (29) and/or tools (84) can be taken by means of the gripper (56) or at which workpieces (29) and/or tools (84) can be deposited by means of the gripper (56).

17. Handling unit according to claim 16,
**characterised in that**
the transfer station (26") has at least one drawer (80) which can be drawn out and/or drawn in by the gripper (56) and/or a carrier (82) which is arranged on the gripper (56).

18. Handling unit according to claim 17,
**characterised in that**
the drawer (80) can be drawn out and/or drawn in in a direction perpendicular to the extent of the horizontal portal (22) by means of the gripper (56) and/or the carrier (82) provided thereon.

19. Handling unit according to claim 16,
**characterised in that**
the transfer station (26; 26') has at least two pallet stations (28) which are arranged beside each other in a direction parallel with the extent of the horizontal portal.

20. Handling unit according to claim 19,
**characterised in that**
a pallet depositing member (66) which is supported movably parallel with the extent of the horizontal portal (22) can be moved by means of the gripper (56) and/or a carrier (82) provided thereon.

## Revendications

1. Dispositif de manipulation (11) avec un portique horizontal (22) sur lequel un coulisseau (46) peut être déplacé horizontalement, sachant qu'un bras (54) est monté sur le coulisseau (46) à pivotement autour d'un axe de pivotement (A) qui s'étend parallèlement au portique (22), et sachant qu'un preneur (56) pour des pièces (29) et/ou des outils (84) est disposé à l'extrémité du bras (54),
**caractérisé en ce que** le coulisseau (46) présente un support oblong ou allongé (48) sur lequel un autre coulisseau (52) est monté à déplacement vertical, et **en ce que** le bras (54) est monté à pivotement sur l'autre coulisseau (52).

2. Dispositif de manipulation selon la revendication 1, **caractérisé en ce que** le support oblong ou allongé (48) s'étend en direction verticale.

3. Dispositif de manipulation selon la revendication 2, **caractérisé en ce que** le support oblong ou allongé (48) s'étend vers le bas à partir du portique (22).

4. Dispositif de manipulation selon la revendication 1, **caractérisé en ce que** le support oblong ou allongé (48^{v}) est incliné par rapport à la verticale.

5. Dispositif de manipulation selon la revendication 4, **caractérisé en ce que** le support incliné (48^{v}) est incliné dans un plan qui est orienté essentiellement perpendiculairement à l'axe de pivotement (A).

6. Dispositif de manipulation selon la revendication 4 ou 5, **caractérisé en ce qu'**une extrémité inférieure du support incliné (48^{v}) est dirigée vers une machine-outil (12^{v}) à laquelle des pièces (29) et/ou des outils (84) sont transférés au moyen du preneur (56^{v}).

7. Dispositif de manipulation selon l'une des revendications 4 à 6, **caractérisé en ce que** le support incliné (48^{v}) est incliné d'environ 45° par rapport à la verticale.

8. Dispositif de manipulation selon l'une des revendications 4 à 7, **caractérisé en ce qu'**une région centrale du support incliné (48^{v}) est fixée sur le coulisseau (46^{v}).

9. Dispositif de manipulation selon l'une des revendications 1 à 8, **caractérisé en ce que** la longueur du support (48) correspond sensiblement à la longueur du bras (54).

10. Dispositif de manipulation selon l'une des revendications 1 à 9, **caractérisé en ce que** le preneur (56) est monté à l'extrémité du bras (54) à rotation autour d'un axe de preneur (B) qui est orienté parallèlement à l'axe de pivotement (A) du bras (54).

11. Cellule de manipulation (10) avec un bâti (20) et un dispositif de manipulation (11) selon l'une des revendications 1 à 10.

12. Cellule de manipulation selon la revendication 11, **caractérisée en ce que** le portique horizontal (22) est disposé dans la région d'un côté frontal (24) du bâti (20) de la cellule de manipulation (10).

13. Cellule de manipulation selon la revendication 12, **caractérisée en ce qu'**une saillie (44) est prévue sur le côté frontal (24) du bâti (20), sur laquelle est fixé un rail de guidage (42) du portique horizontal (22).

14. Cellule de manipulation selon l'une des revendications 11 à 13, **caractérisée en ce que** le support (48) peut être déplacé à l'intérieur du bâti (20) dans le voisinage immédiat d'un côté frontal (24) sur lequel est prévu le portique horizontal (22).

15. Cellule de manipulation selon l'une des revendications 11 à 14, **caractérisée en ce que** le portique horizontal (22) s'étend dans sa direction longitudinale au-delà du bâti (20) de la cellule de manipulation (10).

16. Cellule de manipulation selon l'une des revendications 11 à 15, **caractérisée en ce qu'**un poste de transfert (26) est disposé dans le bâti (20), poste duquel des pièces (29) et/ou des outils (84) peuvent être prélevés au moyen du preneur (56) ou respectivement sur lequel des pièces (29) et/ou des outils (84) peuvent être déposés au moyen du preneur (56).

17. Cellule de manipulation selon la revendication 16, **caractérisée en ce que** le poste de transfert (26") présente au moins un tiroir (80) qui peut être déployé et/ou rentré par le preneur (56) ou par un entraîneur (82) disposé sur le preneur (56).

18. Cellule de manipulation selon la revendication 17, **caractérisée en ce que** le tiroir (80) peut, au moyen du preneur (56) ou de l'entraîneur (82) prévu sur ce dernier, être déployé et/ou rentré dans une direction perpendiculaire à l'étendue du portique horizontal (22).

19. Cellule de manipulation selon la revendication 16, **caractérisée en ce que** le poste de transfert (26, 26') présente au moins deux postes pour palettes (28) disposés en juxtaposition dans une direction parallèle à l'étendue du portique horizontal.

20. Cellule de manipulation selon la revendication 19, **caractérisée en ce qu'**un dépôt de palettes (66), monté à déplacement parallèlement à l'étendue du portique horizontal (22), peut être déplacé au moyen du preneur (56) ou d'un entraîneur (82) prévu sur ce dernier.
